# EUROPÄISCHE PATENTSCHRIFT

(11) **EP 2 447 563 B1**
(45) Veröffentlichungstag und Bekanntmachung des Hinweises auf die Patenterteilung: **19.08.2015**
(21) Anmeldenummer: 11186681.0
(22) Anmeldetag: 26.10.2011
(51) Int. Cl.: F16D 65/14, F16D 127/10

(54) **Scheibenbremse mit einer Selbstverstärkungseinrichtung**
Disc brake with a self-reinforcement device
Frein à disque doté d'un dispositif d'auto-amplification

(30) Priorität: 29.10.2010 DE 102010050099
(43) Veröffentlichungstag der Anmeldung: 02.05.2012
(73) Patentinhaber: KNORR-BREMSE Systeme für Nutzfahrzeuge GmbH, 80809 München (DE)
(72) Erfinder: Baumgartner, Johann, 85368 Moosburg (DE); Seidenschwang, Matthias, 81249 München (DE)
(74) Vertreter: Mattusch, Gundula

(56) Entgegenhaltungen:
- DE-A1-102006 029 942

## Beschreibung

Die Erfindung betrifft eine Scheibenbremse mit einer Selbstverstärkungseinrichtung nach dem Oberbegriff des Anspruchs 1.

Derartige Scheibenbremsen sind in unterschiedlicher Bauweise bekannt und haben sich bereits bestens bewährt. Ein Beispiel zur Illustration einer pneumatisch betätigten Scheibenbremse mit Selbstverstärkung wird in DE 102008004806 A1oder DE 10 2006 029 942 beschrieben.

Die Offenlegungsschrift DE 42 12 353 A1 beschreibt eine druckluftbetätigte Scheibenbremse mit einem eine Bremsscheibe umfassenden Bremssattel. Zwei parallel angeordnete Stellspindeln sind über eine Druckplatte mit einem Bremsbelag gekoppelt, auf den sie bei einer Zuspannung einwirken. Die Stellspindeln werden auch als Druckstempel bezeichnet und sind über eine Synchronisationseinrichtung drehfest miteinander gekoppelt, wobei eine Nachstelleinrichtung auf eine der zwei Stellspindeln derart einwirkt, dass ein Lüftspiel, das sich aufgrund von Belag- und Bremsscheibenverschleiß ändert, im Wesentlichen konstant bleibt. Zur Reduktion eines Umfangschrägverschleißes weisen die zwei Stellspindeln eine ungleiche Justage auf. Sie sind mittels der Synchronisationseinrichtung derart gekoppelt, dass der Abstand zur Bremsscheibe der bezogen auf die Drehrichtung der Bremsscheibe auslaufseitig befindlichen Stellspindel um ein vorbestimmtes Maß geringer als der Abstand der einlaufseitigen Stellspindel ist.

Als nachteilig wird bei der beschriebenen Bremsenbauart gesehen, dass je nach der Betriebsweise der Scheibenbremse ein unterschiedliches "Vorhalten" erforderlich ist. Für ein Lastkollektiv mit einem sehr geringen Anteil höherer Bremskräfte kann der Betrag einer Ungleichjustage relativ gering gehalten werden. Bei einem hohen Anteil starker und energieintensiver Bremsungen muss der Justageunterschied relativ groß eingestellt werden. In der Praxis wird die Justage nach durchschnittlichen Lastkollektiven ausgerichtet. Dies kann bei harten Einsatzbedingungen des zugehörigen Fahrzeugs stärkeren Schrägverschleiß zur Folge haben.

Es ist daher die Aufgabe der vorliegenden Erfindung, eine verbesserte Scheibenbremse mit einer Selbstverstärkungseinrichtung zu schaffen.

Die Aufgabe wird durch eine Scheibenbremse mit den Merkmalen des Anspruchs 1 gelöst.

Demgemäß weist eine Scheibenbremse Folgendes auf: einen Bremssattel, wenigstens einen zuspannseitigen und einen reaktionsseitigen Bremsbelag und eine Bremsscheibe; wobei der zumindest eine zuspannseitige Bremsbelag sowohl in Richtung parallel zu einer Bremsscheibendrehachse als auch parallel zu einer Bremsscheibenreibfläche beweglich ist; eine Betätigungseinrichtung, die auf einen Betätigungsstempel wirkt, wobei der Betätigungsstempel mit einem Druckstück des zuspannseitigen Bremsbelags gekoppelt ist; und eine Selbstverstärkungseinrichtung mit dem Druckstück und zumindest zwei Verstärkungsstempeln mit jeweils einem Keillager, wobei die Keillager jeweils Rollkörper aufweisen, welche jeweils zwischen Rampen angeordnet sind. Die Scheibenbremse ist dadurch gekennzeichnet, dass die Rampen der Keillager unterschiedliche Rampenwinkel aufweisen.

Durch wird eine selbstverstärkende Scheibenbremse geschaffen, wobei ungleiche Keil- oder Rampenwinkel an ein- und auslaufseitig angeordneten Verstärkungsstempeln eine Kompensation möglicher Ursachen von Umfangsschrägverschleiß erreichen. Zusätzliche Bauteile sind nicht notwendig, da die unterschiedlichen Rampenwinkel durch eine entsprechende Bearbeitung bereits vorhandener Teile erfolgen können.

Dabei ist es bevorzugt, dass die Rampen des auf eine Drehrichtung der Bremsscheibe bezogenen auf einer Auslaufseite angeordneten Keillagers einen größeren Rampenwinkel aufweisen als die Rampen des auf die Drehrichtung der Bremsscheibe bezogenen auf einer Einlaufseite angeordneten Keillagers.

Die Positionsabstimmung ist so gewählt, dass die belagseitigen Rampen der beiden Verstärkungsstempel im nicht betätigten Zustand der Scheibenbremse den gleichen Abstand von der Bremsscheibenreibfläche aufweisen, wobei die Rollkörper, die in einer bevorzugten Ausführung als Kugeln ausgebildet sind, sowohl mit diesen belagseitigen Rampen als auch mit den stempelseitigen Rampen in Kontakt stehen.

Bei einer Bremsbetätigung wird der zuspannseitige Bremsbelag in Umfangsrichtung verschoben, wobei er im Bereich des auslaufseitigen Verstärkungsstempels aufgrund des größeren Rampenwinkels stärker an die Reibfläche der Bremsscheibe angepresst wird.

Die Rampenwinkel können sich zum Beispiel um einen Wert im Bereich von etwa 2...4° unterscheiden. Bevorzugt ist dabei ein Wert von etwa 2°.

Bei Vorliegen eines größeren Lüftspiels und damit eines entsprechenden Leerwegs im Anlegevorgang des zuspannseitigen Bremsbelags kann in einer weiteren Ausführung mindestens einer der Rampenwinkel mindestens zwei Stufen aufweisen.

Dabei ist es bevorzugt, dass der Winkel der ersten Stufe des mindestens einen der Rampenwinkel mit mindestens zwei Stufen einen gleichgroßen Wert aufweist wie derjenige des anderen der Rampenwinkel. Dadurch wird erreicht, dass erst bei Erreichen des beginnenden Spannkraftaufbaus eine unterschiedliche Steigung mit einem unterschiedlichen Rampenwinkel auftritt.

Um mit einer solchen gestuften Rampensteigung oder auch stufenlos ineinander übergehenden Rampensteigungen (mit den zugehörigen Rampen- oder Steigungswinkeln) im Hauptbetriebsbereich der Scheibenbremse eine vergleichbare Wirkung wie bei der Rampe mit konstanter Steigung, d.h. mit konstantem Rampenwinkel, zu erzielen, kann eine Verdoppelung des Unterschieds in den Rampenwinkeln, von zum Beispiel 2° auf 4°, erfolgen. Dadurch ergibt es sich, dass die den Schrägverschleiß kompensierende Wirkung im gesamten Arbeitsbereich der Scheibenbremse nahezu gleich ist. Somit ist eine vorteilhafte Anpassung möglich.

Ein Unterschied der Rampenwinkel kann so gewählt sein, dass eine Hubdifferenz der belagseitigen Rampen einen prozentualen Anteil eines ausgeführten Krafthubs der Scheibenbremse im Bereich von 10...30 %, vorzugsweise 15 % ausmacht.

In einer weiteren Ausführung kann die Scheibenbremse wenigstens eine Nachstelleinrichtung mit einem Nachstellgetriebe aufweisen, wobei jeder Stempel mit einer Gewindespindel versehen ist, und wobei der auf eine Drehrichtung der Bremsscheibe bezogene auf einer Auslaufseite angeordnete Verstärkungsstempel mit einem Vorhub versehen ist. Durch eine solche Kombination von Vorhub des Verstärkungsstempels und ungleicher Rampenwinkel ist eine besonders große Anpassungsvielfalt an unterschiedliche Einsatzfälle gegeben.

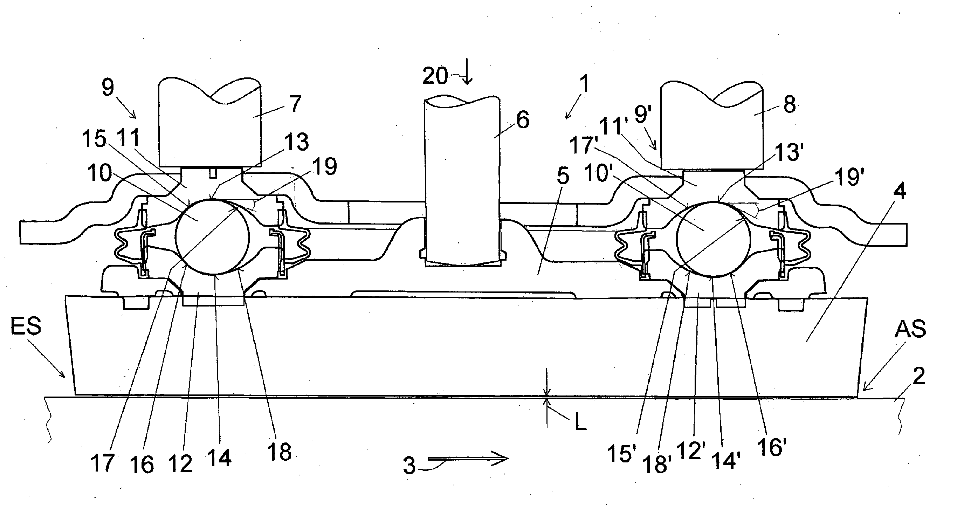

Die Erfindung wird nun anhand eines Ausführungsbeispiels mit Bezug auf die beigefügte Zeichnung näher erläutert. Hierbei zeigt die einzige Figur eine beispielhafte, vereinfachte Schnittdarstellung einer erfindungsgemäßen Scheibenbremse.

In der Figur ist eine Scheibenbremse 1 gezeigt. Es kann zum Beispiel eine Schiebesattel-Scheibenbremse mit einem Bremszylinder (nicht dargestellt) sein, was eine von vielen möglichen Bauformen ist. Beiderseits einer nur angedeuteten Bremsscheibe 2, deren Drehrichtung 3 durch einen Pfeil angedeutet ist, sind Bremsbeläge angeordnet, von denen nur ein zuspannseitiger Bremsbelag 4 dargestellt ist. Der Bremsbelag 4 liegt an einer Bremsscheibenreibfläche an und ist mit seiner von der Bremsscheibe 2 abgewandten Seite über einen nicht gezeigten Belagträger mit einem Druckstück 5 verbunden, welches mittig mit einem Betätigungsstempel 6 einer nicht gezeigten Zuspanneinrichtung gekoppelt ist. Der Betätigungsstempel 6 ist zur Übertragung der in einer Zuspannrichtung 20 auf die Bremsscheibe 2 wirkenden Zuspannkräfte in nicht näher beschriebener Weise an dem Druckstück 5 angelenkt. Der zuspannseitige Bremsbelag 4 ist sowohl in Richtung parallel zu einer Drehachse der Bremsscheibe 2 als auch parallel zu einer Bremsscheibenreibfläche tangential zu der Drehrichtung 3 der Bremsscheibe beweglich.

Mit Bezug auf die Drehrichtung 3 ist eine Einlaufseite ES des Bremsbelags 4 und eine Auslaufseite AS des Bremsbelags 4 festgelegt. Die Drehrichtung 3 entspricht einer Hauptdrehrichtung der Bremsscheibe 2, z.B. bei Vorwärtsfahrt eines zugehörigen Fahrzeugs.

In der in der Figur gezeigten Stellung ist der Bremsbelag 4 in Lösestellung. Das heißt, dass zwischen dem Bremsbelag 4 und der Bremsscheibe 2 ein so genanntes Lüftspiel L vorhanden ist.

Links und rechts in der Figur von dem Betätigungsstempel 6 sind Verstärkungsstempel 7 und 8 in einer Parallelanordnung vorgesehen. Dabei ist ein erster Verstärkungsstempel 7 auf der Einlaufseite ES und ein zweiter Verstärkungsstempel 8 auf der Auslaufseite AS angeordnet. Die Stempel 6, 7 und 8 sind nur teilweise dargestellt, wobei ihre Verbindung mit der nicht gezeigten Zuspanneinrichtung ebenfalls nicht näher dargestellt ist.

Der erste Verstärkungsstempel 7 ist über ein einlaufseitiges Keillager 9, und der zweite Verstärkungsstempel 8 ist über in auslaufseitiges Keillager 9' mit dem Druckstück 5 gekoppelt.

Das einlaufseitige Keillager 9 umfasst einen stempelseitigen Rampenträger 11, einen belagseitigen Rampenträger 12 und einen Rollkörper 10, welcher zwischen dem stempelseitigen Rampenträger 11 und dem belagseitigen Rampenträger 12 angeordnet ist. Der Rollkörper ist auf einer stempelseitigen Rampe 13 und einer belagseitigen Rampe 14 gehalten, wobei er auf diesen Rampen 13 und 14 bei einem Bremsvorgang abrollen kann, wie weiter unten beschrieben wird. Dazu weist die stempelseitige Rampe 13 einen einlaufseitigen Abschnitt mit einer stempelseitigen Ruherampe 15 auf, welcher zur Auslaufseite hin in einen Abschnitt übergeht, der hier als stempelseitige Freirampe 17 bezeichnet ist. Beide Rampenabschnitte 15 und 17 sind zur Bremsscheibe 2 hin geneigt. In gleicher Weise ist die gegenüberliegende belagseitige Rampe 14 mit zwei Rampenabschnitten aufgebaut, von denen eine belagseitige Ruherampe 16 zur Einlaufseite ES weist und eine belagseitige Freirampe 18 auslaufseitig angeordnet ist.

Das auslaufseitige Keillager 9' ist in gleicher Weise mit einem stempelseitigen Rampenträger 11', einem belagseitigen Rampenträger 12' und einem Rollkörper 10' aufgebaut, der ebenfalls auf einer stempelseitigen Rampe 13' und einer belagseitigen Rampe 14' gehalten ist. Die stempelseitige Rampe 13' weist eine einlaufseitig angeordnete stempelseitige Freirampe 17' und eine auslaufseitige stempelseitige Ruherampe 15' auf. Gegenüberliegend umfasst die belagseitige Rampe 14' eine einlaufseitig angeordnete belagseitige Freirampe 18' und eine auslaufseitig liegende belagseitige Ruherampe 16' auf. Im Gegensatz zum einlaufseitigen Keillager 9 ist das auslaufseitige Keillager 9' zu diesem spiegelbildlich aufgebaut.

Die Rollkörper 10, 10' sind hier als Kugeln ausgebildet.

In der in der Figur gezeigten Lösestellung, d.h. bei nicht betätigter Scheibenbremse 1, liegt der Rollkörper 10 des einlaufseitigen Keillagers 9 auf der stempelseitigen Rampe 13 an der stempelseitigen Ruherampe 15 und darunter auf der belagseitigen Rampe 14 an der belagseitigen Ruherampe 16 an. Im Gegensatz dazu liegt der Rollkörper 10' des auslaufseitigen Keillagers 9' auf der stempelseitige Rampe 13' an der stempelseitigen Ruherampe 15' zur Auslaufseite AS hin und darunter auf der belagseitigen Rampe 14' an der belagseitigen Ruherampe 16' zur Auslaufseite AS hin an, wobei die stempelseitige Ruherampe 15' und die darunter angeordnete belagseitige Ruherampe 16' des auslaufseitigen Keillagers 9' spiegelbildlich zum einlaufseitigen Keillager 9 zur Auslaufseite AS hin weisend angeordnet sind.

Die Rampen 13, 14 des einlaufseitigen Keillagers 9 weisen zu Rampenwinkeln 19' der Rampen 13', 14' des auslaufseitigen Keillagers 9' unterschiedliche Rampenwinkel 19 auf. In diesem Ausführungsbeispiel besitzt das auslaufseitige Keillager 9' einen größeren Rampenwinkel 19' als das einlaufseitige Keillager 9. Die unterschiedlichen Rampenwinkel 19, 19' werden erst bei einem Bremsvorgang wirksam. Im nicht betätigten Zustand der Scheibenbremse 1 weisen die belagseitigen Rampen 14 und 14' der beiden Keillager 9 und 9' den gleichen Abstand zur Reibfläche der Bremsscheibe 2 auf.

Eine Selbstverstärkungseinrichtung ist gebildet durch die folgenden Bauteile: Druckstück 5, Rollkörpern 10 und 10', Rampen 13, 14 und 13', 14' mit jeweiligen zugehörigen Verstärkungsstempeln 7 und 8, sowie weiteren Funktionseinheiten bzw. - abschnitten, die hier nicht dargestellt sind. Eine ausführliche Beschreibung der Selbstverstärkungseinrichtung und ihrer Funktion wird zum Beispiel in der Offenlegungsschrift DE 102008004806 A1 angegeben.

Bei einer Bremsbetätigung wird der Bremsbelag 4 durch über das Druckstück 5 durch den auf diese einwirkenden Betätigungsstempel 6 in Zuspannrichtung 20 gegen die Reibfläche der Bremsscheibe 2 gedrückt, wobei zunächst das Lüftspiel L durchlaufen wird. Dann erfolgt bei Kontakt des Bremsbelags 4 mit der Bremsscheibe 2 eine Umfangsverschiebung des Bremsbelags 4 tangential zur Drehrichtung 3 der Bremsscheibe. Dabei bewegt sich der Bremsbelag 4 mit dem Druckstück 5 und den belagseitigen Rampenträgern 12, 12' der Keillager 9, 9' relativ zu den feststehenden stempelseitigen Rampenträgern 11, 11'. Diese Relativbewegung wird durch Abrollen bzw. Abwälzen der Rollkörper 10, 10' auf den Rampen 13, 14 und 13', 14' ermöglicht. Der Bremsbelag 4 wird nun durch den größeren Rampenwinkel 19' am auslaufseitigen Keillager 9' mit dem zweiten Verstärkungsstempel 8 stärker auf die Bremsscheibe 2 in Zuspannrichtung 20 zu bewegt ("voreilt") als dies auf der Einlaufseite ES der Fall ist. Auf diese Weise wird ein ungleichmäßiger Verschleiß des Bremsbelags 4 vermieden, da üblicherweise ohne diese Maßnahme ein stärkerer Verschleiß an der Einlaufseite ES auftritt. Dieses wird durch das oben beschriebene "Voreilen" des Bremsbelags 4 auf der Auslaufseite AS kompensiert.

Der sich daraus zwischen Auslaufseite AS und Einlaufseite ES ergebende Positionsunterschied ist bei konstanten Rampenwinkeln 19, 19' zur Umfangsverschiebung des Bremsbelags 4 angenähert proportional. Bei Vorliegen eines größeren Lüftspiels L und damit eines entsprechenden größeren Leerwegs im Anlagevorgang des Bremsbelags 4 an die Bremsscheibe 2 wird bei Berührung von Bremsbelag 4 und Bremsscheibe 2 diese anfängliche Umfangsverschiebung vor Eintreten des Spannkraftaufbaus sprunghaft ausgeführt. Es liegt nach Überwinden des Lüftspiels L schon eine ungleiche Justage des Bremsbelags 4 vor, welche dann bei weiterem Kraftaufbau entsprechend der weiteren Umfangsverschiebung des Bremsbelags 4 weiter vergrö-βert wird. In diesem Fall existiert eine Kombination eines konstanten Justageanteils, welcher mit einem von der Spannkraft abhängigen Anteil kombiniert wird. Eine derartige Auslegung ist für die meisten Anwendungen vorteilhaft.

Um den konstanten Justageanteil zu vermeiden, ist es erforderlich, die Rampensteigung, d.h. den Rampenwinkel 19, 19' im Lüftspielbereich auf den einlaufseitigen und auslaufseitigen Rampen zunächst konstant zu halten und erst bei Erreichen des beginnenden Spannkraftaufbaus eine unterschiedliche Steigung, d.h. einen unterschiedlichen Rampenwinkel 19, 19' anzuwenden. Der gesamte Steigungs- bzw. Winkelunterschied muss dann zur Erzielung eines gleichwertigen Effekts im Bereich der sehr häufigen Anpassungsbremsungen stärker ausfallen als im Falle einer Auslegung mit gleichbleibend unterschiedlichem Rampenwinkel 19, 19'.

In der folgenden Tabelle ist ein Beispiel für eine konstante Rampensteigung (Rampenwinkel 19, 19') bei einem Lüftspiel L (Leerweg) von 1 mm aufgezeigt.

| **Rampensteigung (Rampenwinkel 19, 19')** | **Hub bei 3 mm Umfangsweg [mm]** | **Hub bei 6 mm Umfangsweg [mm]** |
|---|---|---|
| Einlaufseite ES Rampenwinkel 19 = 30° | 1,7319 | 3,4638 |
| Auslaufseite AS Rampenwinkel 19' = 32° | 1,8744 | 3,7488 |
| | | |
| **Hubdifferenz:** | 0,1425 mm | 0,2850 mm |
| **Prozentualer Anteil am Krafthub:** | 16,3% | 10,36% |

Der Krafthub setzt sich zusammen aus dem Hub minus 1 mm Leerweg.

Der Umfangsweg ist der Weg, um den der Bremsbelag 4 tangential in Drehrichtung 3 der Bremsscheibe 2 beim Bremsvorgang verschoben wird.

In einer weiteren Tabelle weist die einlaufseitige Rampe 13, 14 eine gestufte Rampensteigung bzw. einen gestuften Rampenwinkel 19 auf. Die Abstufung des Rampenwinkels 19 beträgt beim Leerweg 34° und beim Krafthub 30°.

| **Gestufte Rampensteigung (Rampenwinkel 19, 19')** | **Hub bei 3 mm Umfangsweg [mm]** | **Hub bei 6 mm Umfangsweg [mm]** |
|---|---|---|
| Einlaufseite ES Rampenwinkel 19 = 34°/30° | 1,856 | 3,588 |
| Auslaufseite AS Rampenwinkel 19' = 34° | 2,0235 | 4,047 |
| | | |
| **Hubdifferenz:** | 0,1675 mm | 0,459 mm |
| **Prozentualer Anteil am Krafthub:** | 15,36% | 15,06% |

Um mit der gestuften Rampensteigung (dem gestuften Rampenwinkel 19) im Hauptbetriebsbereich der Scheibenbremse 1 vergleichbare Wirkung wie bei der Rampe mit konstanter Steigung zu erzielen, ist eine Verdoppelung des Unterschieds in den Rampenwinkeln von 2° auf 4° erforderlich. Durch eine solche Spreizung des Bereichs der Rampenwinkel 19, 19' wird der Grad der nutzbaren Selbstverstärkung geschmälert. Allerdings ist die einen Schrägverschleiß kompensierende Wirkung im gesamten Arbeitsbereich der Scheibenbremse nahezu gleich.

Der Unterschied der Rampenwinkel 19, 19' ist bevorzugt so gewählt, dass eine Hubdifferenz der belagseitigen Rampen 14, 14' einen prozentualen Anteil des ausgeführten Krafthubs der Scheibenbremse 1 im Bereich von 10...30 %, vorzugsweise 15 % ausmacht.

Die Erfindung ist nicht auf die oben beschriebenen Ausführungsbeispiele beschränkt, sondern im Rahmen der beigefügten Ansprüche modifizierbar.

Es ist zum Beispiel denkbar, dass eine Kombination aus ungleichen Rampenwinkeln 19, 19' und einer Vorjustage eines Verstärkungsstempels 7 oder 8 mit einer Voreilung bzw. einem Vorhub möglich ist. Damit können auch solche Effekte kompensiert werden, welche sich z. B. aus einer Schrägstellung des Bremssattels beispielsweise aufgrund von Lagerspielen ergeben. Diese Vorjustage kann z. B. gemäß DE 42 12 353 A1 erfolgen. Dies kann zum Beispiel im Fall besonderer Ungleichverschleißtendenz sein.

Die gestufte Rampensteigung kann mehr als zwei Rampenwinkel aufweisen. Auch können die Übergänge zwischen den Stufen ausgerundet werden. Es ist auch möglich, dass die Rampe einen Kurvenverlauf mit ineinander übergehenden Rampenwinkeln aufweist.

### Bezugszeichenliste

- 1: Scheibenbremse
- 2: Bremsscheibe
- 3: Drehrichtung
- 4: Bremsbelag
- 5: Druckstück
- 6: Betätigungsstempel
- 7: Erster Verstärkungsstempel
- 8: Zweiter Verstärkungsstempel
- 9: Einlaufseitiges Keillager
- 9': Auslaufseitiges Keillager
- 10, 10': Rollkörper
- 11, 11': Stempelseitiger Rampenträger
- 12, 12': Belagseitiger Rampenträger
- 13, 13': Stempelseitige Rampe
- 14, 14': Belagseitige Rampe
- 15, 15': Stempelseitige Ruherampe
- 16, 16': Belagseitige Ruherampe
- 17, 17': Stempelseitige Freirampe
- 18, 18': Belagseitige Freirampe
- 19, 19': Rampenwinkel
- 20: Zuspannrichtung
- AS: Auslaufseite
- ES: Einlaufseite
- L: Lüftspiel

## Patentansprüche

1. Scheibenbremse (1) mit:
a. einem Bremssattel, wenigstens einem zuspannseitigen und einem reaktionsseitigen Bremsbelag (4) und einer Bremsscheibe (2);
b. wobei der zumindest eine zuspannseitige Bremsbelag (4) sowohl in Richtung parallel zu einer Bremsscheibendrehachse als auch parallel zu einer Bremsscheibenreibfläche beweglich ist;
c. einer Betätigungseinrichtung, die auf einen Betätigungsstempel (6) wirkt, wobei der Betätigungsstempel (6) mit einem Druckstück (5) des zuspannseitigen Bremsbelags (4) gekoppelt ist; und
d. einer Selbstverstärkungseinrichtung mit dem Druckstück (5) und zumindest zwei Verstärkungsstempeln (7, 8) mit jeweils einem Keillager (9, 9'), wobei die Keillager (9, 9') jeweils Rollkörper (10, 10') aufweisen, welche jeweils zwischen Rampen (13, 14 und 13', 14') angeordnet sind;
**dadurch gekennzeichnet, dass**
e. sich die beiden Keillager (9, 9') in ihrer Form unterscheiden, derart dass die Rampen (13, 14 und 13', 14') der beiden Keillager (9, 9') in derselben Richtung tangential zu einer Drehrichtung (3) der Bremsscheibe (2) betrachtet unterschiedliche Rampenwinkel (19, 19') aufweisen.

2. Scheibenbremse (1) nach Anspruch 1, **dadurch gekennzeichnet, dass** die Rampen (13', 14') des auf eine Drehrichtung (3) der Bremsscheibe (2) bezogenen auf einer Auslaufseite (AS) angeordneten Keillagers (9') einen größeren Rampenwinkel (19') aufweisen als die Rampen (13, 14) des auf eine Drehrichtung (3) der Bremsscheibe (2) bezogenen auf einer Einlaufseite (ES) angeordneten Keillagers (9).

3. Scheibenbremse (1) nach Anspruch 1 oder 2, **dadurch gekennzeichnet, dass** im nicht betätigten Zustand der Scheibenbremse (1) die belagseitigen Rampen (14, 14') der beiden Keillager (9, 9') in einem gleichen Abstand zur Reibfläche der Bremsscheibe (2) angeordnet sind.

4. Scheibenbremse (1) nach einem der vorhergehenden Ansprüche, **dadurch gekennzeichnet, dass** sich die Rampenwinkel (19, 19') um einen Wert im Bereich von etwa 2...4° unterscheiden.

5. Scheibenbremse (1) nach Anspruch 4, **dadurch gekennzeichnet, dass** sich die Rampenwinkel (19, 19') um einen Wert von etwa 2° unterscheiden.

6. Scheibenbremse (1) nach einem der vorhergehenden Ansprüche, **dadurch gekennzeichnet, dass** mindestens einer der Rampenwinkel (19, 19') mindestens zwei Stufen aufweist.

7. Scheibenbremse (1) nach Anspruch 6, **dadurch gekennzeichnet, dass** sich die mindestens zwei Stufen um einen Winkel unterscheiden, der im Bereich von 2...4° liegt.

8. Scheibenbremse (1) nach Anspruch 6 oder 7, **dadurch gekennzeichnet, dass** der Winkel der ersten Stufe des mindestens einen der Rämpenwinkel (19, 19') mit mindestens zwei Stufen einen gleichgroßen Wert aufweist wie derjenige des anderen der Rampenwinkel (19, 19').

9. Scheibenbremse (1) nach einem der vorhergehenden Ansprüche, **dadurch gekennzeichnet, dass** ein Unterschied der Rampenwinkel (19, 19') so gewählt ist, dass eine Hubdifferenz der belagseitigen Rampen (14, 14') einen prozentualen Anteil eines ausgeführten Krafthubs der Scheibenbremse (1) im Bereich von 10...30 %, vorzugsweise 15 % ausmacht.

10. Scheibenbremse (1) nach einem der vorhergehenden Ansprüche, **dadurch gekennzeichnet, dass** die Scheibenbremse (1) wenigstens eine Nachstelleinrichtung mit einem Nachstellgetriebe aufweist, wobei jeder Stempel (6, 7, 8) mit einer Gewindespindel versehen ist, und wobei der auf eine Drehrichtung (3) der Bremsscheibe (2) bezogene auf einer Auslaufseite (AS) angeordnete Verstärkungsstempel (8) mit einem Vorhub versehen ist.

## Claims

1. Disc brake (1), comprising:
a. a brake calliper, at least one application-side and one reaction-side brake pad (4) and a brake disc (2);
b. wherein the at least one application-side brake pad (4) is movable both in a direction parallel to a brake disc axis of rotation and in a direction parallel to a brake disc friction surface;
c. further comprising an actuating device acting on an actuating plunger (6), the actuating plunger (6) being coupled to a pressure pad (5) of the application-side brake pad (4); and
d. further comprising a self-energising device comprising the pressure pad and at least two energising plungers (7, 8) with a taper bearing (9, 9') each, each of the taper bearings (9, 9') having a rolling body (10, 10') located between ramps (13, 14 and 13', 14'),
**characterised in that**
e. the two taper bearings (9, 9') differ in their shape in such a way that the ramps (13, 14 and 13', 14') of the two taper bearings (9, 9') have different ramp angles (19, 19') if viewed in the same direction tangential to a direction of rotation (3) of the brake disc (2).

2. Disc brake (1) according to claim 1, **characterised in that** the ramps (13', 14') of the taper bearing (9') located on an outgoing side (AS) related to a direction of rotation (3) of the brake disc (2) have a larger ramp angle (19') than the ramps (13, 14) of the taper bearing (9) located on an ingoing side (ES) related to a direction of rotation (3) of the brake disc (2).

3. Disc brake (1) according to claim 1 or 2, **characterised in that** the pad-side ramps (14, 14') of the two taper bearings (9, 9') are located at a same distance from the friction surface of the brake disc (2) in the non-actuated state of the disc brake (1).

4. Disc brake (1) according to any of the preceding claims, **characterised in that** the ramp angles (19, 19') differ by a value in the range of 2....4 degrees.

5. Disc brake (1) according to claim 4, **characterised in that** the ramp angles (19, 19') differ by a value of approximately 2 degrees.

6. Disc brake (1) according to any of the preceding claims, **characterised in that** at least one of the ramp angles (19, 19') has at least two stages.

7. Disc brake (1) according to claim 6, **characterised in that** the at least two stages differ by an angle in the range of 2....4 degrees.

8. Disc brake (1) according to claim 6 or 7, **characterised in that** the angle of the first stage of the at least one of the ramp angles (19, 19') having at least two stages has the same value as that of the other of the ramp angles (19, 19').

9. Disc brake (1) according to any of the preceding claims, **characterised in that** a difference of the ramp angles (19, 19') is chosen such that a stroke differential of the pad-side ramps (19, 19') amounts to a percentage of a power stroke of the disc brake (1) in the range of 10....30%, preferably 15%.

10. Disc brake (1) according to any of the preceding claims, **characterised in that** the disc brake (1) comprises at least one adjusting device with an adjusting gear, wherein each plunger (6, 7, 8) is provided with a threaded spindle and wherein the energising plunger (8) located on an outgoing side (AS) related to a direction of rotation (3) of the brake disc (2) is provided with a pre-stroke.

## Revendications

1. Frein à disque (1) comprenant :
a. un étrier de frein, au moins une garniture de frein (4) du côté de serrage et au moins une garniture de frein du côté de réaction, et un disque de frein (2) ;
b. dans lequel ladite au moins une garniture de frein (8) du côté de serrage est mobile non seulement en une direction parallèle à un axe de révolution du disque de frein mais aussi en une direction parallèle à une surface de frottement dudit disque de frein ;
c. un moyen de commande agissant sur un poinçon de commande (6), audit poinçon de commande (6) étant accouplé à un élément de pression (5) de ladite garniture de frein (4) du côté de serrage ; et
d. un moyen d'auto-amplification comprenant ledit élément de pression (5) et au moins deux poinçons d'auto-amplification (7, 8), dont chacun est muni d'un support en forme de coin respectif (9, 9'), auxdits supports en forme de coin (9, 9') comprenant des corps roulants respectifs (10, 10'), dont chacun est disposé entre des rampes (13, 14 et 13',14') ;
**caractérisé en ce que**
e. lesdits deux supports en forme de coin (9, 9') se distinguent l'un de l'autre en leur forme de manière, que, vue le long de la même orientation tangentielle à un sens de révolution (3) dudit disque de frein, lesdites rampes (13, 14 et 13', 14') desdits deux supports en forme de coin présentent des angles de rampe différents (19, 19').

2. Frein à disque (1) selon la revendication 1, **caractérisé en ce que** lesdites rampes (13', 14') du support en forme de coin (9'), qui est disposé d'un côté de sortie (AS) par rapport à un sens de révolution (3) dudit disque de frein (2), présentent un angle de rampe plus grand que l'angle auxdites rampes (13, 14) du support en forme de coin (9), qui est disposé d'un côté d'entrée (ES) par rapport à un sens de révolution (3) dudit disque de frein (2).

3. Frein à disque (1) selon la revendication 1 ou 2, **caractérisé en ce qu'**en état non actionné du frein à disque (1), lesdites deux rampes (14, 14') desdits deux supports en forme de coin (9, 9'), du côté de ladite garniture, sont disposées à une distance égale par rapport à la surface de frottement dudit disque de frein (1).

4. Frein à disque (1) selon une quelconque des revendications précédentes, **caractérisé en ce que** lesdits angles de rampe (19, 19') se distinguent l'un de l'autre par une valeur dans la gamme de 2 ... 4° environ.

5. Frein à disque (1) selon la revendication 4, **caractérisé en ce que** lesdits angles de rampe (19, 19') se distinguent l'un de l'autre par une valeur de 2° environ.

6. Frein à disque (1) selon une quelconque des revendications précédentes, **caractérisé en ce qu'**au moins un desdits angles de rampe (19, 19') présente au moins deux niveaux.

7. Frein à disque (1) selon la revendication 6, **caractérisé en ce que** desdites au moins deux niveaux se distinguent l'un de l'autre par un angle dans la gamme de 2 ... 4°.

8. Frein à disque (1) selon la revendication 6 ou 7, **caractérisé en ce que** l'angle du premier niveau d'au moins un desdits angles de rampe (19, 19') à au moins deux niveaux présente une valeur égale à la valeur de l'autre desdits angles de rampe (19, 19').

9. Frein à disque (1) selon une quelconque des revendications précédentes, **caractérisé en ce qu'**une différence entre lesdits angles de rampe (19, 19') est choisie d'une telle manière, qu'une différence en course desdites rampes (14, 14') du côté de ladite garniture corresponde à un pourcentage d'une course d'effort réalisée par le frein à disque (1) dans la gamme de 10 ... 30 %, de préférence de 15 %.

10. Frein à disque (1) selon une quelconque des revendications précédentes, **caractérisé en ce que** le frein à disque (1) comprend au moins un moyen de rattrapage à une transmission de rattrapage, dans lequel chaque poinçon (6, 7, 8) est muni d'une tige filetée, et dans lequel le poinçon d'amplification (8, qui est disposé à un côté de sortie (AS) par rapport à un sens de révolution (3) dudit disque de frein (2), est doté d'une course pilote.
